# EUROPEAN PATENT SPECIFICATION

(11) **EP 1 486 146 B1**
(45) Date of publication and mention of the grant of the patent: **13.02.2008**
(21) Application number: 04013782.0
(22) Date of filing: 11.06.2004
(51) Int. Cl.: A47C 31/02

(54) **Member for engaging and connecting sheets**
Element zur Anbringung und Befestigung von Bezügen
Elément pour l'engagement et la connection de feuilles

(30) Priority: 12.06.2003 JP 2003167754
(43) Date of publication of application: 15.12.2004
(73) Proprietor: KURARAY CO., LTD., Kurashiki-shi, Okayama-ken 710-0801 (JP); Aplix, 75008 Paris (FR)
(72) Inventor: Tanokura, Tooru, Osaka-shi Osaka (JP); Ogawa, Shiro, Osaka-shi Osaka (JP); Billarant, Fabrice, 44850 Le Cellier (FR); Lam, Robert, Kwai Chung, N.T. (HK)
(74) Representative: Eidelsberg, Olivier Nathan

(56) References cited:
- DE-A- 19 955 990
- DE-C- 19 952 416
- US-A- 4 776 636
- US-A- 5 236 243
- US-B1- 6 206 467
- US-B1- 6 560 827

## Description

The present invention relates to a member for engaging and connecting sheets, sheets having the aforesaid member, a molded article using the aforesaid member and a process for producing the aforesaid molded article. More particularly, it is concerned with a member for engaging and connecting sheets to easily and favorably cover the surface of a cushion of molded resin article such as an automobile seat with a covering body (sheet cover) and to fix the same, a high quality sheet-covered molded article equipped with the aforesaid member and a process for producing the above-mentioned molded article.

Automobile seats, business chairs and backrests have heretofore been constituted by covering the surface of a cushion made of molded synthetic resin foam such as polyurethane foam with a covering body such as a sheet cover. In the case where the molded resin article is covered with the covering body, in order to prevent a space from being formed between the molded resin article and the covering body and to prevent the covering body from being brought to unfixed state, an engaging member is set up on each of the molded resin article and the covering body, thereby fixing the covering body to the molded resin article by engaging the fastening members with each other.

As a molding method for an automobile seat, there is proposed a so called Mold-In method which comprises placing, at a prescribed position inside of a mold, a fastening member having a number of engaging elements on its surface, namely a fastener tape; and pouring a molding resin into the mold to allow the resin to foam and to carry out molding so that the molded resin article and fastener tape are integrated with each other and at the same time, the engaging elements are exposed on the surface of the article. In addition, there is set up on the back surface of the covering body, engaging elements which are capable of mutually engaging with the engaging elements of the fastener tape, and by allowing the above-mentioned two-kinds of engaging elements to engage with each other, the covering body is placed over the molded resin article so as to cover the same.

There is publicly well known a method wherein a recess or a groove is provided on the molded resin article, and also a fastener tape for engagement is fixedly set up on the bottom of the recess (for instance, US-A-5236243 and JP-A-280956/1996). US - A - 6206467 recites a member as defined in the preamble of claim 1.

US-A-5236243 describes the advantages that an expensive loop fastener tape is not in use for the cover body and besides, and forming of a connecting end portion and thread sewing for loops can be performed at the same time. In this methods, in order to insert the covering body into a narrow recess, it is cut and superimposed to make and form a selvage end, and thread lines are loosely sewn onto the surfaces of the selvage end to form loop engaging elements. However, the production of such intricate end portion gives rise to a problem of a production cost equal to or higher than that of the loop fastener tape.

In addition, JP-A-280956/1996 describes a vehicle sheet in which production work can be simplified, since linking is necessarily intensified by pushing pressure when a driver is seated, strict accuracy is not needed on a setting position of fastener tapes. The sheet has a cover body made by forming loop engaging elements on the outer surface of a tube-like soft textile such as towel textile, inserting the soft textile into a recess of a molded article, and engaging the same with hook engaging elements installed on the bottom of the recess to fix a covering body on the molded article. Nevertheless, it is difficult to insert the tube-like end portion made of soft textile into a narrow recess, thereby bringing about a disadvantage of decrease in working efficiency.

Such being the case, an industrially satisfactory method is not yet available, whereby improvement thereon has been sought.

The present invention has been made in the light of the above-mentioned problems. Thus an object of the present invention is to provide a member for engaging and connecting sheets which is well suited for inserting a covering body such as a sheet cover into the recess of a molded article such as an automobile seat, and easily and favorably covering the molded article with a covering body and fix the same; a molded article easily producible by the use of the above-mentioned member for engaging and connecting; and further a process for producing the molded article.

It has been found by the present inventors that the objects can be achieved by applying a member for engaging and connecting having a specific constitution, as defined in one of claims 1 to 6. The present invention also relates to sheets as defined in claim 7 and to a molded article as defined in claim 8 or 9.

In the following, the present invention will be described with reference to the attached drawings.
FIG. 1 is a schematic perspective view showing a conventional sheet for covering a molded article and a method for inserting the sheet into the recess on the molded article;
FIG 2-1 is a schematic perspective view showing a sheet for covering a molded article and a method for inserting the sheet into the recess on the molded article ; and
FIG. 2-6 and FIG. 2-8 are cross sectional views showing other member for engaging and connecting sheets according to the present invention.

The symbols in the drawings shll have the following designations.
1, 2: sheet, 3: end of sheet, 4:fastener tape, 5: engaging elements (loops), 6: molded resin article, 7: recess, 8: bottom portion of the recess, 9: engaging elements of a fastener tape (hooks), 10: fastener tape, 11: fixing portion, 12: linking portion, 13: engaging portion, 14: rod (core body).

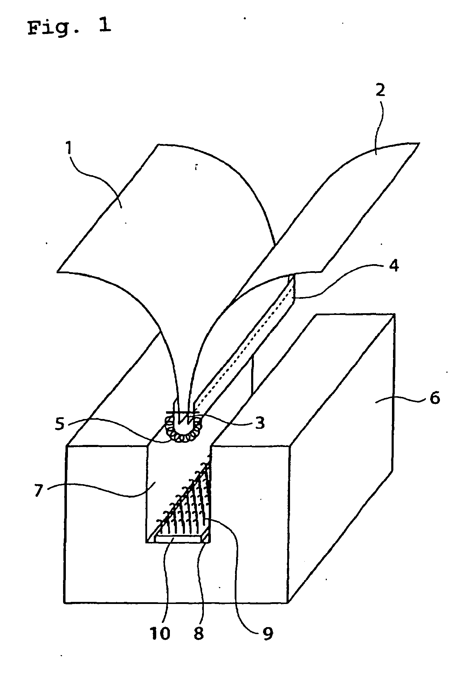

FIG. 1 is a schematic view illustrating a conventional covering sheet for a molded article and a method for inserting the covering sheet into a recess on the molded article. The end 3 of each of the covering sheet 1, 2 is arranged so as to be enveloped with a fastener tape 4, and sewn together to form a engaging end. On the outer surface of the fastener tape 4, there are installed a large number of engaging elements, for instance, loop-like elements.

There is fixedly embedded a fastener tape 10 having a large number of engaging elements 9 on the bottom portion 8 of the recess 7 which is concavely provided on a surface of the molded resin article 6 composed of a foamed synthetic resin. In the case of the recess 7 having a large space, it is easy to insert the end 3 of sheets through the recess 7 and engage the engaging elements 5 and engaging elements 9 of a fastener tape 10 with each other, but in the case of a small space, it becomes difficult to insert the end 3 of sheets to the recess owing to the sheet being flexible and strong resistance between the sheet and the resin, thereby making it difficult to engage both of the above-mentioned elements. In particular, in the case where a variety of products are manufactured in an industrial scale, easy and reliable working is required, whereby the conventional technique has been far from satisfactory.

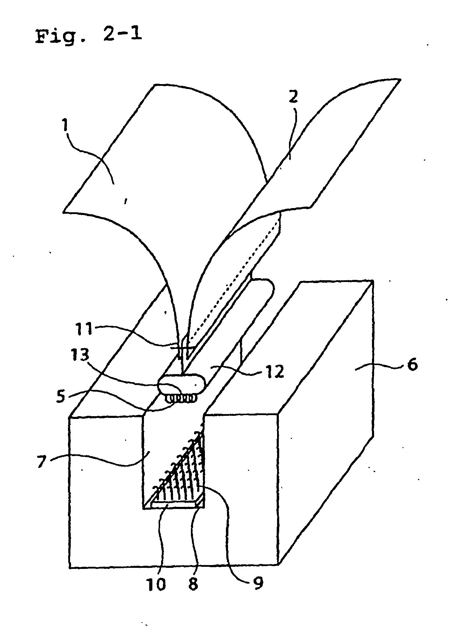

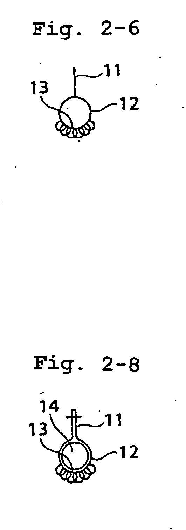

FIG. 2-1 is a schematic perspective view which describes the covering sheets for a molded article and also a method for inserting the covering sheets into the recess on the molded article.

The member for engaging and connecting sheets according to the present invention is used by being linked with the end of a sheets 1 and 2. Examples of the sheets 1 and 2 include not only knitted or woven fabric, but also nonwoven fabric composed of natural fiber or synthetic fiber, foamed synthetic resin sheet such as foamed polyethylene sheet and foamed polystyrene sheet, leather sheet, laminates thereof and composite materials. It is possible to properly optionally select the sheets from a wide range of materials according to the purpose of use of the molded article and other factors. In order to insert the sheets 1 and 2 into a small recess which is concavely provided on the molded resin article 6, the sheets can be fixed by putting both the ends of the sheets in order, aligning the fixing portion 11 of the member for engaging and connecting between the two ends or outside thereof (not shown on the drawing), and subjecting the portion to any one of sewing, adhesion by the use of an adhesive, hot-melt adhesion by means of heat, light, ultrasonic wave, high frequency electric wave treatments or the like.

The member for engaging and connecting sheets as illustrated on FIG. 2-1 is constituted of a fixing portion 11 in the form of filament or band, an engaging portion 13 which is equipped on the outer surface with a large number of engaging elements 5 and a linking portion 12 which links the aforesaid portions 11 and 13. The member for engaging and connecting, which is inserted into the long recess 7 of the molded article, is in the form of a long tape as a whole. The specific length thereof, which is determined according to necessity, is usually in the range of 10 cm to 1m, approximately. In order that the engaging elements 5 which are installed on the engaging portion 13 have to be efficiently engaged with the engaging elements 9 of the fastener tape 10 which is fixedly installed on the bottom portion 8 of the recess 7 on the molded article, it is preferable that the engaging portion 13 should be plane and accordingly be arranged almost perpendicular to the face or axis of the fixing portion 11. the term "perpendicular" need not be strict, but needs only to be in such relation that the engaging elements are sufficiently engaged with the engaging elements on the bottom portion. Saying it differently, it needs only that one face of the engaging elements is almost opposite to the other face of the engaging elements.

FIGs. 2-6 is cross sectional view showing construction of the member for engaging and connecting sheets according to the present invention.

FIG 2-6 is of such construction as including a linking portion 12 having a circular cross sectional shape and an engaging portion 13 on the underside thereof. As illustrated on 2-6, the engaging elements 5 and the engaging elements 9 of the fastener tape 10 need to be constituted so as to be sufficiently engaged with each other even when the bottom portion of the engaging portion is in the form of circular arc.

In these constructions, the enclosed cross sectional portion may be a hollow pipe composed of a flexible resin, or a resinous body composed of a flexible resin or a foamed resin. Examples of usable flexible resin include various flexible polyolefin resin, polyester resin and elastomers. Examples of usable foamed resin include polyethylene foam, polystyrene foam and polyurethane foam. In addition, a metallic hollow pipe is also usable when necessary.

The engaging elements to be installed on outer surface of the engaging portion are preferably constituted by means of integral molding of the member for engaging and connecting by any of various molding methods. As a molding method, injection molding, profile extrusion molding and the like are applicable to the production. It is also possible to install the engaging elements by bonding a separately prepared member for engaging elements to the engaging portion by a usual adhesive bonding means or hot-melt bonding means. Moreover, taking into consideration stitch work with a covering body, a fibrous member can be attached on the fixing portion made of a synthetic resin.

FIG. 2-8 is a cross sectional view showing another example of the member for engaging and connecting sheets according to the present invention, wherein its construction is such that a rod 14 is wrapped by fibrous fabric or nonwoven fabric, the upper portion thereof is bonded by means of sewing, adhesive bonding, hot-melt bonding or the like to form the the fixing portion 11, the engaging portion 13 is formed on the lower side thereof, and the linking portion 12 is formed in the middle thereof. The above-mentioned construction is advantageous in that various members for engaging and connecting sheets can easily be provided by altering the combination of the rod with the fibrous fabric or nonwoven fabric.

The material for the rod is preferably a synthetic resin. In particular, the use of a flexible resin or a foamed resin brings about a member rich in flexibility, which leads to a preferable member for engaging and connecting sheets to be inserted into a curved recess. As the synthetic resin to be used for the rod, the resins same as those of the member for engaging and connecting sheets exemplified hereunder are usable. Of those are particularly preferable foamed synthetic resin such as polyethylene foam, polystyrene foam and polyurethane foam.

As the engaging elements to be installed on the member for engaging and connecting sheets according to the present invention, there are utilizable hook-shaped engaging elements and loop-shaped engaging elements. As the hook-shaped engaging elements, there are applicable those imparted with a engaging function such as the form of hook, mushroom and arxow-head. As the loop-shaped engaging elements, there are applicable knitted woven fabric with multi-filament loops, looped fabric, napped nonwoven fabric and the like. In order to avoid a fear of a hook engaging elements exposed to the outside being unnecessarily engaging with different fibrous product at the time of inserting the engaging portion into the recess 7, a loop engaging elements are preferably installed to the engaging portion. In the case of employing a loop engaging elements as the ellements, the engaging elements 9 of the fastener tape 10 which is fixedly embedded at the bottom portion 8 of the recess 7 of the molded article are invariably hook engaging elements.

The material for the member for engaging and connecting sheets according to the present invention is preferably a synthetic resin in consideration of its being bonded to the covering body. In particular, being rich in flexibility, a member made of a flexible resin or a foamed resin preferably functions as a connecting member to be inserted into the curved recess. Any synthetic resin is usable without specific limitation provided that it is imparted with sufficient mechanical strength and heat resistance. Such synthetic resin is exemplified by polyolefinic resins such as polyethylene, polypropylene, ethylene/propylene copolymer; polyester resin such as polyethylene terephthalate and polybutylene terephthalate; and polyamide resin such as 6-nylon and 6,6-nylon. Of these polyolefinic resins are particularly preferable. Moreover, taking into consideration the recycling of the member, the material therefor is preferably of the same type as that of the covering sheet. When necessary a metal is usable as a part of the member for engaging and connecting sheets.

In the present invention, the end 3 of the sheets equipped with the member for engaging and connecting sheets which is prepared in the aforesaid manner is inserted into the recess 7 which is concavely provided on the surface of the molded article, thereby being engaged and fixed on the molded article, and the surfaces of the molded article is covered with the sheet. The engaging elements 5 of the engaging portion 13 linked with the end 3 of the sheet, when engaged with the engaging elements 9 of the fastener tape 10 which is fixedly embedded on the bottom portion 8 of the recess, can certainly fix the sheet onto the surfaces of the molded article. Although the force of engagement between the engaging elements of two portions is sufficiently strong, in order to allow the frictional resistance between the sheet and the wall face of the recess to contribute to the prevention of the sheet escaping from the molded article, it is preferable that the thickness of the end of the sheet be larger than the recess and that the sheet be forcibly pushed into the recess.

Being constitued in the above-mentioned manner, the member for engaging and connecting sheets according to the present invention is imparted with both appropriate strength and flexibility. Accordingly in the case where the member is inserted into the recess on the molded article, the member can be pushed thereinto in a state of being moderately curved by using an insertion tool or worker's fingers, thereby enabling the inserting work to be easily and simply carried out.

The molded article to be produced according to the present invention, which is not specifically limited, is suitably applicable to sheet cushions for vehicles such as automobiles.

According to the present invention, there is provided a member for engaging and connecting sheets which is capable of easily and favorably covering the surface of a molded resin article including not only an automobile sheet but also a cushioning molded article such as a business chair and backrest with a covering body and fixing the same. By the use of the aforesaid member for engaging and connecting, it is possible to provide a high quality sheet-covered molded article and further industrially advantageous effect is exhibited in that the production process of automobile seats or the like can be simplified.

## Claims

1. A member for engaging and connecting sheets which comprises a fixing portion (11) which fixes sheets, an engaging portion (13) and a linking portion (12) which links said fixing portion (11) and said engaging portion (13) **characterized in that** said linking portion (12) has a circular cross sectional shape, a bottom portion of said engaging portion (13) is in a form of circular arc in its cross sectional shape, said linking portion (12) has a larger cross sectional area than that of said fixing portion and a number of engagin elemnts (5) are installed on outer surface of said engaging portion (13).

2. The member for engaging and connecting sheets according to Claim 1 wherein said member is composed of a synthetic resin.

3. The member for engaging and connecting sheets according to Claim 1 or 2, wherein said engaging portion is arranged almost perpendicular to an axis of said fixing portion.

4. The member for engaging and connecting sheets according to Claim 1 or 2 wherein the engaging elements of said engaging portion are constituted by integral molding of the fixing portion and the linking portion.

5. The member for engaging and connecting sheets acording to Claim 1 or 2 wherein the engaging elements of said engaging portion are installed on the outer face of said engaging portion by means of adhesion or hot melt bonding.

6. The member for engaging and connecting sheets according to any one of Claims 1 to 5, **characterized in that** the fixing portion (11) is formed on the upper portion of a rod (14), the engaging portion (13) is formed on the lower side of said rod (14) and the linking portion (12) is formed in the middle of said rod (14).

7. Sheets with a member for engaging and connecting sheets, as defined in one of claims 1 to 6, ends of the sheets being fixed together by the fixing portion of said member.

8. A molded article covered with sheets that are engaged and connected to a recess on said molded article, **characterized by** a member for engaging and connecting sheets as defined in one of claims 1 to 6, ends of the sheets are fixed to each other by the fixing portion of said member, and said engaging elements of the engaging portion are engaged with engaging elements of a fastener tape which is fixedly embedded in the recess on said molded article.

9. The molded article according to Claim 8, wherein said engaging elements of the member are loop-like engaging elements, the engaging elements of a fastener tape on the bottom of the recess are hook-like engaging elements, and the molded article is made of a foamed synthetic resin.

## Patentansprüche

1. Element zum Ineingriffbringen und Verbinden von Lagen, das einen Fixierabschnitt (11), der Lagen fixiert, einen Eingriffabschnitt (13) und einen Verknüpfungsabschnitt (12), der den Fixierabschnitt (11) und den Eingriffabschnitt (13) verbindet, umfasst, wobei das Element **dadurch gekennzeichnet ist, dass** der Verknüpfungsabschnitt (12) einen kreisförmigen Querschnitt aufweist, der untere Teil des Eingriffabschnitts (13) in Bezug auf die Querschnittsform in der Form eines Kreisbogens vorliegt, der Verknüpfungsabschnitt (12) eine größere Querschnittsfläche als der Fixierabschnitt aufweist und eine Zahl von Eingriffelementen (5) auf der äußeren Oberfläche des Eingriffabschnitts (13) installiert sind.

2. Element zum Ineingriffbringen und Verbinden von Lagen nach Anspruch 1, wobei das Element aus einem Kunstharz besteht.

3. Element zum Ineingriffbringen und Verbinden von Lagen nach Anspruch 1 oder 2, wobei der Eingriffabschnitt nahezu senkrecht zur Achse des Fixierabschnitts angeordnet ist.

4. Element zum Ineingriffbringen und Verbinden von Lagen nach Anspruch 1 oder 2, wobei die Eingriffelemente des Eingriffabschnitts durch einstückiges Formen des Fixierabschnitts und des Verknüpfungsabschnitts gebildet sind.

5. Element zum Ineingriffbringen und Verbinden von Lagen nach Anspruch 1 oder 2, wobei die Eingriffelemente des Eingriffabschnitts an der Außenfläche des Eingriffabschnitts mittels Adhäsion oder Heißkleben installiert sind.

6. Element zum Ineingriffbringen und Verbinden von Lagen nach einem der Ansprüche 1 bis 5, das **dadurch gekennzeichnet ist, dass** der Fixierabschnitt (11) am oberen Abschnitt eines Stabs (14) ausgebildet ist, der Eingriffabschnitt (13) an der unteren Seite des Stabs (14) ausgebildet ist und der Verknüpfungsabschnitt (12) in der Mitte des Stabs (14) ausgebildet ist.

7. Lagen mit einem Element zum Ineingriffbringen und Verbinden von Lagen gemäß der Definition in einem der Ansprüche 1 bis 6, wobei Enden der Lagen durch den Fixierabschnitt des Elements miteinander befestigt sind.

8. Formteil, das mit Lagen bedeckt ist, die mit einer Vertiefung in dem Formteil in Eingriff stehen und mit dieser verbunden sind, wobei das Formteil **gekennzeichnet ist durch** ein Element zum Ineingriffbringen und Verbinden von Lagen gemäß der Definition in einem der Ansprüche 1 bis 6, wobei Enden der Lagen **durch** den Fixierabschnitt des Elements aneinander fixiert sind und die Eingriffelemente des Eingriffabschnitts mit Eingriffelementen eines Befestigungsbands, das in der Vertiefung des Formteils fest eingebettet ist, in Eingriff stehen.

9. Formteil nach Anspruch 8, wobei die Eingriffelemente des Elements schlingenähnliche Eingriffelemente sind, die Eingriffelemente des Befestigungsbands am Boden der Vertiefung hakenähnliche Eingriffelemente sind und das Formteil aus einem Kunstharzschaumstoff besteht.

## Revendications

1. Elément pour coopérer avec des feuilles et connecter des feuilles qui comporte une partie (11) de fixation qui fixe des feuilles, une partie (13) de coopération et une partie (12) de liaison qui lie la partie (11) de fixation et la partie (13) de coopération, **caractérisé en ce que** la partie (12) de liaison a en section transversale une forme circulaire, une partie inférieure de la partie (13) de coopération a la forme d'un arc circulaire dans sa forme en section transversale, la partie (12) de liaison a une aire en section transversale plus grande que celle de la partie de fixation et un certain nombre d'éléments (5) de coopération sont disposés sur une surface extérieure de la partie (13) de coopération.

2. Elément pour coopérer avec des feuilles et connecter des feuilles suivant la revendication 1, dans lequel l'élément comporte une résine synthétique.

3. Elément pour coopérer avec des feuilles et connecter des feuilles suivant la revendication 1 ou 2, dans lequel la partie de coopération est agencée presque perpendiculairement à un axe de la partie de fixation.

4. Elément pour coopérer avec des feuilles et connecter des feuilles suivant la revendication 1 ou 2, dans lequel les éléments de coopération de la partie de coopération sont constitués par un moulage d'une pièce de la partie de fixation et de la partie de liaison.

5. Elément pour coopérer avec des feuilles et connecter des feuilles suivant la revendication 1 ou 2, dans lequel les éléments de coopération de la partie de coopération sont disposés sur la face extérieure de la partie de coopération au moyen d'un adhésif ou d'une liaison par fusion à chaud.

6. Elément pour coopérer avec des feuilles et connecter des feuilles suivant l'une quelconque des revendications 1 à 5, **caractérisé en ce que** la partie (11) de fixation est formée sur la partie supérieure d'une tige (14), la partie (13) de coopération est formée sur le côté inférieur de la tige (14) et la partie (12) de liaison est formée dans le milieu de la tige (14).

7. Feuilles comportant un élément pour coopérer avec des feuilles et connecter des feuilles tel que défini suivant l'une quelconque des revendications 1 à 6, des extrémités des feuilles étant fixées ensemble par la partie de fixation de l'élément.

8. Article moulé recouvert de feuilles qui sont mises en coopération et connectées à un évidement sur l'article moulé, **caractérisé par** un élément pour coopérer avec des feuilles et connecter des feuilles tel que défini suivant l'une des revendications 1 à 6, des extrémités des feuilles sont fixées l'une à l'autre par la partie de fixation de l'élément, et les éléments de coopération de la partie de coopération sont mis en coopération avec des éléments de coopération d'une bande de fixation qui est noyée de manière fixe dans l'évidement sur l'article moulé.

9. Article moulé suivant la revendication 8, dans lequel les éléments de coopération de l'élément sont des éléments de coopération en forme de boucles, les éléments de coopération d'une bande de fixation sur le fond de l'évidement sont des éléments de coopération en forme de crochet, et l'article moulé est réalisé à partir d'une résine synthétique de mousse.
